# EUROPEAN PATENT APPLICATION

(11) **EP 4 510 773 A1**
(43) Date of publication of application: **19.02.2025**
(21) Application number: 22937209.9
(22) Date of filing: 02.11.2022
(51) Int. Cl.: H04W 88/04, H04W 76/14

(54) **RELAY TRANSMISSION METHOD, SWITCHING METHOD, APPARATUS, AND USER EQUIPMENT**

(30) Priority: 15.04.2022 CN 202210401186
(71) Applicant: China Telecom Corporation Limited, Beijing 100033 (CN)
(72) Inventor: HUANG, Changzheng, Beijing 100033 (CN); LIU, Hai, Beijing 100033 (CN); LONG, Biao, Beijing 100033 (CN); BI, Qi, Beijing 100033 (CN)
(74) Representative: Petraz, Gilberto Luigi
(86) International application number: PCT/CN2022/129266
(87) International publication number: WO 2023/197576

(57) **Abstract**

Provided in the embodiments of the present application is a relay transmission method. The method comprises: establishing a first protocol data unit session connection between a relay and a network; establishing a second protocol data unit session connection between a first relay and a user equipment; and according to a multi-path transmission control protocol connection between the user equipment and a non-third generation partnership project interworking function entity, making the user equipment connect to the network via both the first relay and a second relay when performing signal transmission with the network. A multi-path capability is supported by means of a multi-path transmission control protocol proxy of a non-third generation partnership project interworking function entity; the capacity of a cellular system and the reliability of a connection can be improved by means of a multi-relay path; and the present invention can be applied to ultra-reliable and low latency business and vertical industry applications, and cloud network edge device home applications, such that the problem of how a remote UE establishes a multi-relay-based multi-path connection with a network is solved, and the existing capacity of a 5G+ cellular system is improved, thereby realizing the high-frequency coverage of a cellular network.

## Description

### CROSS REFERENCE TO RELATED APPLICATION

The present application is based on and claims the priority to the Chinese Patent Application NO. 202210401186.6, filed on April 15, 2022, the entire contents of which are hereby incorporated by reference.

### TECHNICAL FIELD

The present disclosure relates to the field of wireless communications, and in particular to a relay transmission method, a switching method, an apparatus and a user equipment.

### BACKGROUND

In the field of wireless communications, since spectrum resources are extremely valuable, the current development trend of the wireless communications is to use increasingly high frequencies. However, there is a certain influence relationship between frequency and signal coverage. Field tests have shown that as the frequency increases, a signal coverage radius will be greatly reduced. Due to cost reasons, current high-frequency base stations cannot be deployed on a large scale, resulting in the limited coverage.

Proximity-based Services (ProSe) relay technologies enable a remote User Equipment (UE) outside the coverage to access a network through the ProSe relay, which is a potential means to solve the high-frequency coverage.

### SUMMARY

To solve the above technical problems, embodiments of the present disclosure provide a relay transmission method, a switching method, an apparatus, an electronic device, a computer-readable storage medium, and a computer program product.

Other features and advantages of the present disclosure will become apparent from the following detailed description, or may be learned in part by the practice of the present disclosure.

According to an aspect of embodiments of the present disclosure, there is provided a relay transmission method, including: performing network registration on a relay to establish a first protocol data unit session connection from the relay to a network, wherein the relay is configured to be connected to a non-third generation partnership project interworking function, and includes a first relay and a second relay; establishing a second protocol data unit session connection between the first relay and a user equipment based on a network address allocated to the user equipment by the first relay; and enabling, according to a multipath transmission control protocol connection between the user equipment and the non-third generation partnership project interworking function, the user equipment to be connected to the network via the first relay and the second relay while performing signal transmission with the network, wherein the multipath transmission control protocol connection is established based on the first protocol data unit session connection and the second protocol data unit session connection.

According to an aspect of embodiments of the present disclosure, there is provided a relay transmission apparatus, including: a network registration module, configured to perform network registration on a relay; a first session module, configured to establish ; a second session module, configured to establish ; and a transmission module, configured to.

In the technical solution provided in embodiments of the present disclosure, the transmission module is configured to establish a third protocol data unit session connection from the user equipment to the second relay according to a network address of the second relay and a new network address of the user equipment, wherein the network address of the second relay and the new network address of the user equipment are obtained based on a multipath transmission control protocol; establish, based on the first protocol data unit session connection and the third protocol data unit session connection, a multipath transmission control protocol sub-flow connection between the user equipment and the non-third generation partnership project interworking function; and enable, through the multipath transmission control protocol connection, the user equipment to be connected to the network via the first relay, and enable, through the multipath transmission control protocol sub-flow connection, the user equipment to be connected to the network via the second relay.

In the technical solution provided in embodiments of the present disclosure, the relay transmission apparatus further includes a security module, configured to establish, according to the network address of the non-third generation partnership project interworking function, a signaling security protocol tunnel between the user equipment and the non-third generation partnership project interworking function; and perform, based on the signaling security protocol tunnel, non-access stratum registration on the user equipment to enable the user equipment to access the network.

In the technical solution provided in embodiments of the present disclosure, the security module is configured to: establish, according to a network key exchange protocol and the network address of the non-third generation partnership project interworking function, a security protocol association between the user equipment and the non-third generation partnership project interworking function; receive, based on the security protocol association, request information of the user equipment and response information of the non-third generation partnership project interworking function to the request information, wherein the request information includes a network key exchange verification request and a multipath parameter of the user equipment, and the response information includes a network key exchange verification request response and a multipath capability parameter of the non-third generation partnership project interworking function; enable, according to the network key exchange verification request and the network key exchange verification request response, network key exchange between the user equipment and the non-third generation partnership project interworking function; and after the network key exchange is completed, establish, according to the multipath capability parameter of the user equipment and the multipath capability parameter of the non-third generation partnership project interworking function, the multipath transmission control protocol connection and the multipath transmission control protocol sub-flow connection.

According to an aspect of embodiments of the present disclosure, there is provided another relay transmission method, including: performing relay discovery, establishing a second protocol data unit session connection with a first relay, wherein the first relay is configured to be connected to a non-third generation partnership project interworking function; establishing, according to a network address of a user equipment and a network address of the non-third generation partnership project interworking function, a multipath transmission control protocol connection between the user equipment and the non-third generation partnership project interworking function, wherein the network address of the user equipment is allocated by the first relay, the network address of the non-third generation partnership project interworking function is obtained based on a first protocol data unit session connection between the relay and the network, and the relay includes a first relay and a second relay; enabling, according to the multipath transmission control protocol connection, the user equipment to be connected to the network via the first relay and the second relay while performing signal transmission with the network, wherein the multipath transmission control protocol connection is established based on the first protocol data unit session connection and the second protocol data unit session connection.

According to an aspect of embodiments of the present disclosure, there is provided a user equipment, including: a relay discovery unit, configured to perform relay discovery; a session unit, configured to establish ; a multipath transmission control protocol unit, configured to establish; and a transmission unit, configured to .

In the technical solution provided in embodiments of the present disclosure, the relay discovery unit is configured to: after performing the relay discovery and discovering the first relay, establish a unicast communication connection between the user equipment and the first relay; enable, based on the unicast communication connection, the user equipment to receive the network address of the user equipment allocated by the first relay; and establish, according to the network address of the user equipment, the second protocol data unit session connection between the user equipment and the first relay.

In the technical solution provided in embodiments of the present disclosure, the transmission unit is configured to: receive and record, based on the multipath transmission control protocol connection, the network address of the non-third generation partnership project interworking function and network addresses of multiple relay paths for multipath concurrent relay transmission; obtain, according to the network addresses of the multiple relay paths, a new network address of the user equipment and a network address of the second relay; when a relay path is required to be extended, establish, based on the new network address of the user equipment, the network address of the second relay and the network address of the non-third generation partnership project interworking function, a third protocol data unit session connection from the user equipment to the second relay; establish, according to the third protocol data unit session connection and the first protocol data unit session connection, a multipath transmission control protocol sub-flow connection; and enable, through the multipath transmission control protocol connection, the user equipment to be connected to the network via the first relay, and enable, through the multipath transmission control protocol sub-flow connection, the user equipment to be connected to the network via the second relay.

In the technical solution provided in embodiments of the present disclosure, the user equipment further includes a registration unit, configured to, when the network is accessed by the user equipment for the first time, send registration request information to the non-third generation partnership project interworking function to enable the non-third generation partnership project interworking function to forward the registration request information to a core network element to perform a non-access network registration process; and receive an authentication completion message sent by the non-third generation partnership project interworking function, completing registration, and accessing the network.

According to an aspect of embodiments of the present disclosure, there is provided a relay switching method, including: performing network registration on a relay to establish a first protocol data unit session connection from the relay to a network, wherein the relay is configured to be connected to a non-third generation partnership project interworking function, and includes a first relay and a second relay; establishing a second protocol data unit session connection between the first relay and a user equipment based on a network address allocated to the user equipment by the first relay; establishing, according to a network address of the non-third generation partnership project interworking function, a signaling security protocol tunnel between the user equipment and the non-third generation partnership project interworking function to enable the user equipment to be connected to the non-third generation partnership project interworking function through the first relay and access the network; reusing the signaling security protocol tunnel to establish a third protocol data unit session connection from the user equipment to the second relay, and enabling the user equipment to switch to be connected to, through the second relay, the non-third generation partnership project interworking function and access the network.

In the technical solution provided in embodiments of the present disclosure, reusing the signaling security protocol tunnel to establish the third protocol data unit session connection from the user equipment to the second relay includes: establishing, according to the network address of the non-third generation partnership project interworking function, the signaling security protocol tunnel between the user equipment and the non-third generation partnership project interworking function; performing, based on the signaling security protocol tunnel, non-access stratum registration on the user equipment to enable the user equipment to access the network; when relay switching is initiated, reusing the signaling security protocol tunnel, and reconfiguring the network address of the user equipment through a IKEv2 mobility and multihoming protocol; and establishing, according to the reconfigured network address of the user equipment, the third protocol data unit session connection from the user equipment to the second relay.

According to an aspect of embodiments of the present disclosure, there is provided an electronic device, including: one or more processors; and a storage device, configured to store one or more programs, wherein the one or more programs, when executed by the one or more processors, cause the electronic device to implement the relay transmission method as described above, or implement the relay switching method as described above.

According to an aspect of embodiments of the present disclosure, there is provided a computer-readable storage medium having computer-readable instructions stored thereon, wherein the computer-readable instructions, when executed by a processor of a computer, cause the computer to perform the relay transmission method as described above, or perform the relay switching method as described above.

According to an aspect of embodiments of the present disclosure, there is further provided a computer program product including a computer program, wherein the computer program, when executed by a processor, implements steps in the relay transmission method described above, or implements steps in the relay switching method described above.

It should be noted that the above general description and the following detailed description are merely exemplary and explanatory and should not be construed as limiting of the disclosure.

### BRIEF DESCRIPTION OF THE DRAWINGS

The drawings herein are incorporated in and constitute a part of the specification, illustrate embodiments consistent with the present disclosure, and together with the description serve to explain principles of the present disclosure. Apparently, the drawings in the following description are only some embodiments of the present disclosure. For those of ordinary skilled in the art, other drawings may be obtained based on these drawings without paying any creative effort. In the drawings:
FIG. 1 shows a schematic diagram of an example system architecture according to some embodiments of the present disclosure;
FIG. 2 shows a flowchart of a relay transmission method according to some embodiments of the present disclosure;
FIG. 3 shows a topological diagram of a relay transmission method according to some embodiments of the present disclosure;
FIG. 4 shows a schematic flowchart of implementing multipath concurrent transmission in a relay transmission method according to some embodiments of the present disclosure;
FIG. 5 shows a schematic interaction diagram of implementing multipath concurrent transmission in a relay transmission method according to some embodiments of the present disclosure;
FIG. 6 shows a flowchart of another relay transmission method according to some embodiments of the present disclosure;
FIG. 7 shows a flowchart of a relay switching method according to some embodiments of the present disclosure;
FIG. 8 shows a schematic diagram of a relay transmission apparatus according to some embodiments of the present disclosure;
FIG. 9 shows a schematic diagram of a user equipment according to some embodiments of the present disclosure;
FIG. 10 shows a schematic diagram of a hardware structure of a user equipment according to some embodiments of the present disclosure; and
FIG. 11 shows a schematic diagram of a hardware structure of another user equipment according to some embodiments of the present disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. Implementations set forth in the following description of the embodiments do not represent all implementations consistent with the present disclosure. Instead, they are merely examples of apparatuses and methods consistent with some aspects related to the present disclosure as recited in the appended claims.

The block diagrams shown in the figures are only functional entities and do not necessarily correspond to physically separate entities. In other words, these functional entities may be implemented in software, or implemented in one or more hardware modules or integrated circuits, or implemented in different networks and/or processor devices and/or microcontroller devices.

The flowcharts shown in the figures are only exemplary and do not necessarily include all the contents and operations/steps, or are not necessarily executed in the described order. For example, some operations/steps can be decomposed, and some operations/steps can be combined or partially combined, so an actual execution order may change according to actual conditions.

The term "multiple" as used in the present disclosure refers to two or more. "And/or" describes an association between associated objects, indicating that three relationships can exist. For example, A and/or B can represent: A exists alone, both A and B exist, and B exists alone. The character "/" generally indicates that the associated objects are in an "or" relationship.

In 5G networks, it is necessary to adopt the relay concurrent transmission to improve the existing capacity of 5G cellular systems. However, ProSe relay technologies in the related arts do not support the multi-relay concurrent transmission that can improve the system capacity. Therefore, it is impossible to directly achieve high-frequency coverage of cellular networks through the ProSe relay technologies.

In order to solve the above technical problems, embodiments of the present disclosure provide a relay transmission method, a switching method, an apparatus, an electronic device, a computer-readable storage medium, and a computer program product, thereby enabling, at least to a certain extent, a Non-3GPP InterWorking Function (N3IWF) to control establishment of a MultiPath Transmission Control Protocol (MPTCP) multi-relay connection with a remote UE, which can improve a capacity of a cellular system and connection reliability, and is suitable for high-reliability and low-latency commercial and vertical industry applications.

First of all, it should be noted that a 5G core network supports a non-3GPP access network (such as WLAN access), and the non-3GPP access network may be connected to the 5G core network through the N3IWF. The N3IWF is connected to 5G core network Control Plane (CP) and User Plane (UP) functions through N2 and N3 interfaces, respectively. If the selected N3IWF is located in the same Public Land Mobile Network (PLMN) as the 3GPP access, UEs connected to the same 5G core network of the PLMN through both the 3GPP access and the non-3GPP access will be served by the same Access and Mobility Management Function (AMF).

The MPTCP allows Transmission Control Protocol (TCP) connections to use multiple paths to maximize channel resource usage. The MPTCP is particularly useful in wireless network environments. In addition to a gain in data transmission rate brought about by a channel reverse multiplexing mechanism, links may be added or dropped when a user enters or exits coverage without interrupting an end-to-end TCP connection. The MPTCP includes PC5 (which is a sidelink communication interface, a communication interface between terminals) and Uu (which is a cellular network communication interface, a communication interface between the terminal and the base station). To solve short-distance communication between two terminals, 3GPP proposed ProSe technologies. ProSe is based on 3GPP LTE and defines a new logical interface PC5. Two ProSe UEs may communicate over short distances through the PC5 interface. ProSe includes a ProSe Direct Discovery process and a ProSe Direct Communication process, and air interface resources used in these two processes can be pre-configured.

In the 5G networks, a Protocol Data Unit (PDU) connection service is a service of exchanging PDU data packets between a User Equipment (UE) and a Data Network (DN), and the PDU connection service is implemented by the UE or an application function initiating establishment of a PDU session. A PDU session refers to a process of the UE communicating with the DN. After the PDU session is established, a data transmission channel between the UE and the DN is established.

Internet Protocol Security (IPSec) can realize VPN through corresponding tunneling technologies. IPSec has two modes: a tunneling mode and a transmission mode. The tunneling mode is suitable for protecting communications between different networks (when the communication must pass through an intermediate untrusted network), and the tunneling mode is mainly used to interoperate with a gateway or a terminal system that does not support a Layer 2 Tunneling Protocol (L2TP)/IPSec or Point-to-Point Protocol (PPTP) connection, which are not limited by embodiments of the present disclosure.

Technical solutions of embodiments of the present disclosure relate to technologies such as computer technologies and wireless communication technologies, and are specifically described by the following embodiments.

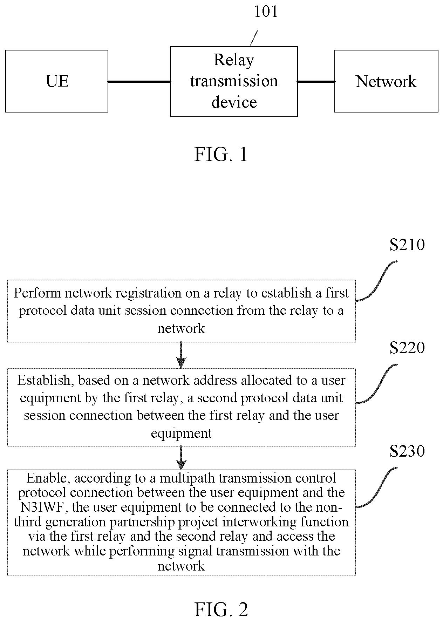

FIG. 1 shows a schematic diagram of an example system architecture according to some embodiments of the present disclosure.

Referring to FIG. 1, the system architecture may include a UE, a relay transmission device 101 and a network. The relay transmission device 101 may be a communication line connecting the UE and the 5G network, and a transmission medium may include an aerial bare line, a cable, an optical cable, a radio wave, etc., or may be at least one of a processing computer, a computing cluster, a neural network computer, etc. Relevant technicians may use the relay transmission device 101 to implement the multi-ProSe relay concurrent transmission, improving the existing capacity of the 5G+ cellular system, and achieving the high-frequency coverage of the cellular network.

For example, the relay transmission device 101 controls the establishment of the MPTCP connection with the remote UE through the N3IWF, the AMF controls the access of the remote UE, and a Session Management Function (SMF) carries out a billing process for the multi-relay path, etc. Through the multi-ProSe relay concurrent transmission, the capacity of the cellular system and the connection reliability are improved, which can be used for high-reliability and low-latency commercial and vertical industry applications, as well as for cloud-network-edge-terminal home applications.

It should be noted that the relay transmission method provided in embodiments of the present disclosure is generally executed by the relay transmission device 101.

Implementation details of the technical solutions of embodiments of the present disclosure are described in detail below.

FIG. 2 shows a flowchart of a relay transmission method according to some embodiments of the present disclosure, and the relay transmission method may be performed by a relay transmission device, which may be the relay transmission device 101 shown in FIG. 1. Referring to FIG. 2, the relay transmission method at least includes steps S210 to S230, which are described in detail as follows.

In the S210, network registration is performed on a relay to establish a first protocol data unit session connection from the relay to a network, and the relay is configured to be connected to a non-third generation partnership project interworking function, and includes a first relay and a second relay

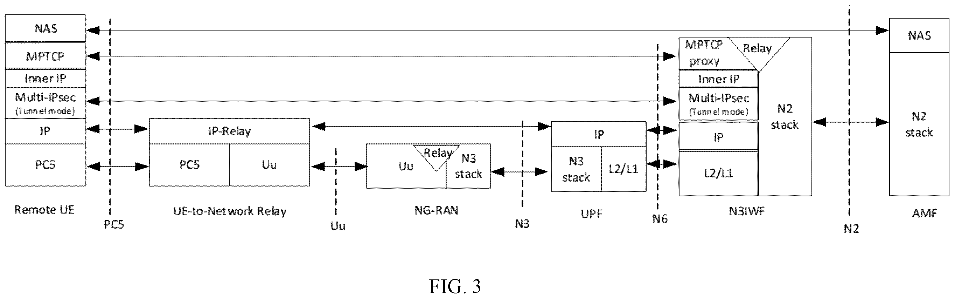

FIG. 3 shows a topological diagram of a relay transmission method according to some embodiments of the present disclosure. As shown in FIG. 3, a remote UE may be connected to a U2N relay through a PC5 interface, the U2N relay is connected to a NG-RAN (a 5G radio access network) through a Uu interface, the NG-RAN is connected to a User Plane Function (UPF) through a N3 interface, the UPF is connected to the N3IWF through a N6 interface, and the N3IWF is connected to the AMF through a N2 interface. In some embodiments of the present disclosure, a Layer-3 UE-to-Network relay (U2N) performs the registration process to establish the PDU session connection with the network. The remote UE starts a Multipath TCP (MPTCP) function. Through the MPTCP protocol, the TCP traffic of the multi-relay path may be diverted, switched and split. An IP on each path allocated by the U2N relay is recorded, which may be used for the multipath transmission. Through the N3IWF, MPTCP proxy information, that is, an IP address, a port number and a type of a MPTCP proxy, may be sent to the remote UE.

In some embodiments of the present disclosure, the PDU connection service is a service of exchanging PDU data packets between the UE and the DN, and the PDU connection service is implemented by the UE or an Application Function (AF) initiating establishment of a PDU session. A PDU session refers to a process of the UE communicating with the DN. After the PDU session is established, a data transmission channel between the UE and the DN is established. In the embodiments, the remote UE connected to the U2N relay supporting the N3IWF may select the N3IWF and determine a N3IWF IP address. In actual applications, there may be scenarios where the N3IWF does not support the multipath (for example, a MPTCP proxy function has not yet been added). For this case, a MPTCP field may be added when a Fully Qualified Domain Name (FQDN) is constructed, and the N3IWF supporting the multipath may be selected based on the FQDN.

In the S220, a second protocol data unit session connection between the first relay and a user equipment is established based on a network address allocated to the user equipment by the first relay.

In some embodiments of the present disclosure, the remote UE performs discovery of the U2N relay and establishes a unicast mode communication connection, and establishes, according to the IP address allocated by the first relay, the PDU session with the relay for relaying.

In the S230, according to a multipath transmission control protocol connection between the user equipment and the non-third generation partnership project interworking function, the user equipment is enabled to be connected to the network via the first relay and the second relay while performing signal transmission with the network, and the multipath transmission control protocol connection is established based on the first protocol data unit session connection and the second protocol data unit session connection.

In some embodiments of the present disclosure, once the MPTCP connection is established, the N3IWF will store a MPTCP session entry, including a MA-PDU session IP address and its TCP port of the remote UE, a link-specific multipath IP address and its TCP port (the multipath IP address and the TCP port for a specific path, referring to the storage of the address and port of each path). When uplink or downlink MPTCP traffic is received, the N3IWF may use the stored MPTCP session entry for subsequent IP conversion. In the embodiments, session information in the session entry may include a number, IMSI, IMEI, a PDU session ID, a session type (IPv4, IPv6, IPv4v6, Ethenet, Unstructured), uplink and downlink rates, a billing ID, roaming status information, UE IP information, PCF information, QoS information, tunneling information, a destination address, a SMF identity, slice information, default DRB information, a data network name, AMF information, user location information, session management information, a UPF ID, an online billing identity, an offline billing identity and other related information. In the embodiments, those skilled in the art should be aware that when the multipath relay transmission is performed, it is not limited to using only two relay paths, and the second relay may include multiple relays, so that the multipath relay concurrent transmission can be achieved through the above method.

In the technical solutions provided in some embodiments of the present disclosure, the multipath capability is supported through using, based on the first protocol data unit session connection from the relay to the network and the second protocol data unit session connection between the first relay and the user equipment, the multipath transmission control protocol connection between the user equipment and the non-third generation partnership project interworking function. Through the multi-relay path, the capacity of the cellular system and the connection reliability can be improved, which can be used for high-reliability and low-latency commercial and vertical industry applications, as well as for cloud-network-edge-terminal home applications. A problem of how the remote UE establishes a multi-relay based multipath connection with the network is solved, which improves the existing capacity of the 5G+ cellular system, and achieves the high-frequency coverage of the cellular network.

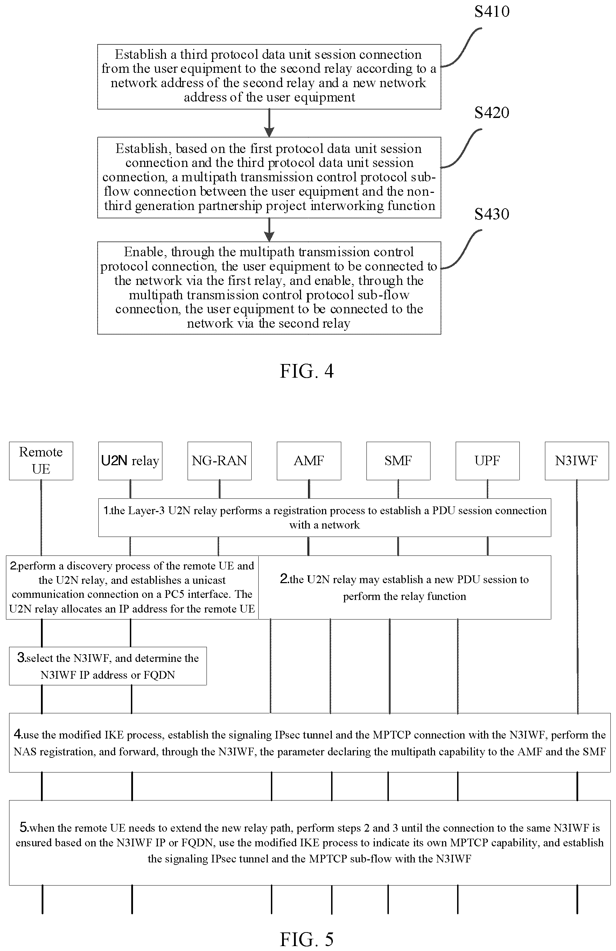

FIG. 4 shows a schematic flowchart of implementing multipath concurrent transmission in a relay transmission method according to some embodiments of the present disclosure. As shown in FIG. 4, it includes steps S410 to S430, which are described in detail as follows.

In the S410, a third protocol data unit session connection from the user equipment to the second relay is established according to a network address of the second relay and a new network address of the user equipment, and the network address of the second relay and the new network address of the user equipment are obtained based on a multipath transmission control protocol.

In some embodiments of the present disclosure, a relay path between the remote UE, the first relay and the network may be established through the first protocol data unit session connection and the second protocol data unit session connection. When the remote UE needs to extend a new relay path, the remote UE may perform discovery of a new U2N relay, establish a new unicast mode communication connection, and establish, according to a new IP address allocated by the second relay, the PDU session with the second relay for relaying. Similarly, the remote UE connected to the U2N relay supporting the N3IWF selects the N3IWF and determines the N3IWF IP address, until the connection to the same N3IWF is ensured based on the N3IWF IP or FQDN. In this case, the remote UE obtains a new IP and establishes the PDU session with the new U2N relay, thereby establishing a new relay path between the remote UE, the second relay and the network.

In some embodiments of the present disclosure, the user equipment (i.e., the remote UE) may indicate its own MPTCP capability by using a modified Internet Key Exchange (IKE) process, establish a signaling IPsec tunnel and a MPTCP connection with the N3IWF, perform Non-Access Stratum (NAS) registration, and forward, through the N3IWF, a parameter declaring the multipath capability to the AMF and the SMF. In the embodiments, the IPsec is a protocol package that protects a network transmission protocol cluster of the IP protocol by encrypting and authenticating the IP protocol packet.

In the S420, a multipath transmission control protocol sub-flow connection between the user equipment and the non-third generation partnership project interworking function is established based on the first protocol data unit session connection and the third protocol data unit session connection.

In some embodiments of the present disclosure, when the remote UE needs to extend a new relay path, connection to the same N3IWF is ensured based on the N3IWF IP or FQDN, and in this case, the remote UE obtains a new IP and establishes the PDU session with the new U2N relay. The remote UE can use the modified IKE process to indicate its own MPTCP capability, and establish, based on the first protocol data unit session connection and the third protocol data unit session connection, the signaling IPsec tunnel and the MPTCP sub-flow with the N3IWF.

In the S430, the user equipment is enabled, through the multipath transmission control protocol connection, to be connected to the network via the first relay, and the user equipment is enabled, through the multipath transmission control protocol sub-flow connection, to be connected to the network via the second relay

FIG. 5 shows a schematic interaction diagram of implementing multipath concurrent transmission in a relay transmission method. In some embodiments of the present disclosure, as shown in FIG. 5, first, the Layer-3 U2N relay performs a registration process to establish a PDU session connection with the network, that is, the first protocol data unit session connection, and then the remote UE performs discovery of the U2N relay, establishes the unicast mode communication connection, and establishes, according to the IP address allocated by the relay, the PDU session with the relay for relaying. The remote UE connected to the U2N relay supporting the N3IWF selects the N3IWF and determines the N3IWF IP address. In actual applications, since there may be scenarios where the N3IWF does not support the multipath, the MPTCP field can be added when the FQDN is constructed, and the N3IWF that supports the multipath can be selected based on the FQDN. The remote UE uses the modified IKE process to indicate its own MPTCP capability, establishes the signaling IPsec tunnel and the MPTCP connection with the N3IWF, performs the NAS registration, and forwards, through the N3IWF, the parameter declaring the multipath capability to the AMF and the SMF. Finally, when the remote UE needs to extend the new relay path, the above relay path steps before the establishment may be repeated until the connection to the same N3IWF is ensured based on the N3IWF IP or FQDN. In this case, the remote UE obtains the new IP and establishes the PDU session with the new U2N relay. The remote UE can use the modified IKE process to indicate its own MPTCP capability and establish the signaling IPsec tunnel and the MPTCP sub-flow with the N3IWF.

In some embodiments of the present disclosure, after the second protocol data unit session connection between the first relay and the user equipment is established, a signaling security protocol tunnel may be established between the user equipment and the non-third generation partnership project interworking function based on the network address of the non-third generation partnership project interworking function; and the non-access stratum registration is performed on the user equipment based on the signaling security protocol tunnel to enable the user equipment to access the network.

In some embodiments of the present disclosure, the non-access stratum, as a functional layer between the core network and the user equipment, can support the signaling and data transmission between the core network and the user equipment. The functions of the non-access stratum include mobility management, call control, session management and identity management. The highest layer function of a control plane between the UE and the AMF includes general processes supporting the UE mobility, such as an authentication process, an authorization process, a general UE configuration update process and a security control mode process, and a management process supporting the session, through which the data connection between the UE and the data network can be established and maintained, and the NAS transmission process is supported to provide transmission of payloads such as UE parameter update information. In the embodiments, the non-access stratum registration is performed on the user equipment based on the signaling security protocol tunnel to enable the user equipment to access the network.

In some embodiments of the present disclosure, after the signaling security protocol tunnel between the user equipment and the non-third generation partnership project interworking function is established according to the network address of the non-third generation partnership project interworking function, a security protocol association between the user equipment and the non-third generation partnership project interworking function is established according to a network key exchange protocol and the network address of the non-third generation partnership project interworking function; request information of the user equipment and response information of the non-third generation partnership project interworking function to the request information are received based on the security protocol association, the request information includes a network key exchange verification request and a multipath parameter of the user equipment, and the response information includes a network key exchange verification request response and a multipath capability parameter of the non-third generation partnership project interworking function; network key exchange is enabled, according to the network key exchange verification request and the network key exchange verification request response, between the user equipment and the non-third generation partnership project interworking function; and after the network key exchange is completed, the multipath transmission control protocol connection and the multipath transmission control protocol sub-flow connection are established according to the multipath capability parameter of the user equipment and the multipath capability parameter of the non-third generation partnership project interworking function.

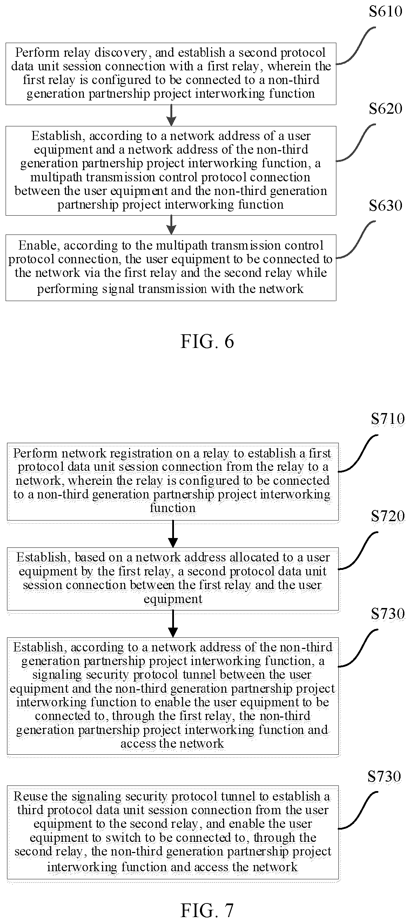

FIG. 6 shows a flowchart of another relay transmission method according to some embodiments of the present disclosure. The relay transmission method may be performed by a user equipment, i.e., a remote UE. As shown in FIG. 6, the relay transmission method includes at least steps S610 to S630, which are described in detail as follows.

In the S610, relay discovery is performed, a second protocol data unit session connection with a first relay is established, and the first relay is configured to be connected to a non-third generation partnership project interworking function.

In some embodiments of the present disclosure, after performing the relay discovery and discovering the first relay, the remote UE establishes the unicast communication connection between the user equipment and the first relay; based on the unicast communication connection, the user equipment is enabled to receive a network address of the user equipment allocated by the first relay; and according to the network address of the user equipment, the second protocol data unit session connection is established between the user equipment and the first relay.

In some embodiments of the present disclosure, the remote UE enables the MPTCP function and records the IP allocated on each path by the U2N relay for the multipath transmission. The remote UE performs the discovery of the U2N relay, establishes the unicast mode communication connection, and establishes, according to the IP address allocated by the first relay, the PDU session with the first relay for relaying.

In the S620, a multipath transmission control protocol connection between the user equipment and the non-third generation partnership project interworking function is established according to a network address of a user equipment and a network address of the non-third generation partnership project interworking function, the network address of the user equipment is allocated by the first relay, the network address of the non-third generation partnership project interworking function is obtained based on a first protocol data unit session connection between the relay and the network, and the relay includes a first relay and a second relay.

In some embodiments of the present disclosure, the multipath transmission control protocol connection is established between the user equipment and the N3IWF, and the MPTCP proxy information (i.e., the IP address, the port number and the type of the MPTCP proxy) sent by the N3IWF to the remote UE is received.

In the S630, according to the multipath transmission control protocol connection, the user equipment is enabled to be connected to the network via the first relay and the second relay while performing signal transmission with the network, and the multipath transmission control protocol connection is established based on the first protocol data unit session connection and the second protocol data unit session connection.

In some embodiments of the present disclosure, based on the multipath transmission control protocol connection, the network address of the non-third generation partnership project interworking function and network addresses of multiple relay paths for multipath concurrent relay transmission are received and recorded; a new network address of the user equipment and a network address of the second relay are obtained according to the network addresses of the multiple relay paths; when a relay path is required to be extended, a third protocol data unit session connection from the user equipment to the second relay is established based on the new network address of the user equipment, the network address of the second relay and the network address of the non-third generation partnership project interworking function; a multipath transmission control protocol sub-flow connection is established according to the third protocol data unit session connection and the first protocol data unit session connection; and the user equipment is enabled, through the multipath transmission control protocol connection, to be connected to the network via the first relay, and the user equipment is enabled, through the multipath transmission control protocol sub-flow connection, to be connected to the network via the second relay.

In some embodiments of the present disclosure, the remote UE uses the modified IKE process to indicate its own MPTCP capability, establishes the signaling IPsec tunnel and the MPTCP connection with the N3IWF, performs the NAS registration, and forwards, through the N3IWF, the parameter declaring the multipath capability to the AMF and the SMF. When the remote UE needs to extend a new relay path, connection to the same N3IWF as the original relay path is ensured, and in this case, the remote UE obtains a new IP and establishes the PDU session with the new U2N relay. The remote UE uses the modified IKE process to indicate its own MPTCP capability, and establishes the signaling IPsec tunnel and the MPTCP sub-flow with the N3IWF.

In some embodiments of the present disclosure, modifying the IKE process may include: first, the remote UE is enabled to select the N3IWF in the 5G PLMN according to the N3IWF IP or FQDN, the remote UE initiates the IKE initial exchange and establishes an IPsec Security Association (SA) (that is, the security protocol association) with the selected N3IWF. When IPSec works, devices at both ends must first reach agreement on the SA, which is a security policy agreement between the two devices. SA may include: an encryption algorithm, an authentication algorithm, a shared session key, and a key usage period. SA is unidirectional, and two SAs need to be established for bidirectional communication. A device at the IPSec receiving end can decrypt and receive, according to a SA database at the receiving end, the data encrypted by IPSec so as to achieve the privacy and integrity of the transmitted data. IKE is a network key exchange protocol and a core component of the IPSec technologies. Through IKE, both parties can be authenticated, public keys can be exchanged, private key resources can be generated, and key management can be performed. IKE runs in two stages to determine the SA for IKE and IPSec. The first stage allows IKE peers to authenticate each other and determine the session key. In this stage, Diffie-Hellman (DH) exchange, cookie and ID exchange are used to create an Internet Security Association Key Management Protocol (ISAKMP) SA. After the ISAKMP SA is determined, all IKE communications between an initiator and a responder will be protected by encryption and integrity check. A purpose of this stage is to establish a secure communication channel between peers to protect the negotiation in a second stage. The second stage uses an Encapsulating Security Payload (ESP) or an Authentication Header (AH) to protect the IP data stream to negotiate and determine the IPSec SA. In the embodiments, the remote UE should initiate the IKE_AUTH exchange by sending an IKE_AUTH request message, and a MP_CAPABLE parameter or a MP_JOIN parameter of the UE is added to the IKE_AUTH request message to declare that the sender has a MPTCP capability and wishes to establish an MPTCP connection on this connection, or wishes to establish a new sub-flow on the existing MPTCP connection. The N3IWF responds with an IKE_AUTH response message. A MP_CAPABLE parameter or a MP_JOIN parameter of the N3IWF is added to the IKE_AUTH response message to declare that the N3IWF has a MPTCP proxy capability. The remote UE verifies the N3IWF information and sends the MP_CAPABLE/MP_JOIN parameters of the remote UE and the N3IWF and the ACK confirmation information.

In some embodiments of the present disclosure, a MPTCP structure mainly includes kind, Length, and subtype, where the kind field indicates that a header option is an MPTCP header option, the Length field indicates a length of the header option, the subtype option indicates a subtype of the MPTCP option, and the remaining bytes are specific data of the subtype option. Depending on a value of the subtype, the subtype of the MPTCP option is also different, and the subtypes include MP_CAPABLE and MP_JOIN.

In some embodiments of the present disclosure, when accessing the network for the first time, the user equipment sends the registration request message to the non-third generation partnership project interworking function, so that the non-third generation partnership project interworking function forwards the registration request message to a core network element to perform a non-access network registration process, and the user equipment receives an authentication completion message sent by the non-third generation partnership project interworking function to complete the registration and access the network.

In some embodiments of the present disclosure, when the remote UE accesses the network for the first time, it is also necessary for the remote UE to send a registration request, and the MP_INDICATOR parameter is added in the registration request to declare the multipath capability of the UE to the network. When the UE accesses for the first time, the N3IWF forwards the registration request to the AMF to execute the registration process. The UE completes the identity authentication, and the N3IWF sends the authentication completion information to the UE. The N3IWF forwards the registration request containing the MP_INDICATOR parameter to the SMF for the remote UE to subsequently use billing, traffic control and other processes of the multi-relay function.

In some embodiments of the present disclosure, the signaling IPsec tunnel and an MPTCP connection or sub-flow are established between the remote UE and the N3IWF, and each MPTCP sub-flow corresponds to a signaling IPsec tunnel. The MPTCP proxy function of the N3IWF will store the MPTCP session entry, including all addresses of the remote UE (IPs on each sub-flow allocated by the U2N relay). When the UE accesses for the first time, the AMF sends a NAS registration acceptance message to the N3IWF, and the N3IWF forwards it to the UE through the established signaling IPsec tunnel, while sending its own MPTCP proxy information.

FIG. 7 shows a flowchart of a relay switching method according to some embodiments of the present disclosure.

As shown in FIG. 7, the relay switching method includes S710 to S740.

In the S710, network registration is performed on a relay to establish a first protocol data unit session connection from the relay to a network, and the relay is configured to be connected to a non-third generation partnership project interworking function, and includes a first relay and a second relay.

In some embodiments of the present disclosure, as shown in FIG. 5, the process of performing the network registration on the relay and establishing the session connection from the relay to the network is the same as that in the above-mentioned embodiments, which will not be described in detail here.

In the S720, a second protocol data unit session connection between the first relay and a user equipment is established based on a network address allocated to the user equipment by the first relay.

In some embodiments of the present disclosure, as shown in FIG. 5, the process of establishing the connection between the first relay and the remote UE is the same as that in the above embodiments, which will not be described in detail here.

In the S730, according to a network address of the non-third generation partnership project interworking function, a signaling security protocol tunnel between the user equipment and the non-third generation partnership project interworking function is established to enable the user equipment to be connected to the non-third generation partnership project interworking function through the first relay and access the network.

In some embodiments of the present disclosure, as shown in FIG. 5, the process of establishing the connection between the remote UE and the N3IWF is the same as that in the above-mentioned embodiments, which will not be repeated here.

In the S740, the signaling security protocol tunnel is reused to establish a third protocol data unit session connection from the user equipment to the second relay, and the user equipment is enabled to switch to be connected to, through the second relay, the non-third generation partnership project interworking function and access the network.

In some embodiments of the present disclosure, the remote UE uses the IKE to establish an IPsec tunnel, and establishes a session path from the remote UE to the relay to the network. When the path switching is initiated, the established tunnel is reused to establish a new path passing through the second relay and perform the relay data transmission. Then, the relay switching is completed by the remote UE releasing the old PC5 connection (i.e., the path from the remote UE to the first relay before the switching). A difference between this embodiment and the embodiment in the above-mentioned relay transmission method is that in this embodiment, the MPTCP function is not used, and only the IPsec tunnel can be established by using the IKE. By reusing the established tunnel, an outer IP address of the remote UE facing the same N3IWF as before is reconfigured.

In some embodiments of the present disclosure, reusing the signaling security protocol tunnel to establish the third protocol data unit session connection from the user equipment to the second relay includes: establishing, according to the network address of the non-third generation partnership project interworking function, the signaling security protocol tunnel between the user equipment and the non-third generation partnership project interworking function; performing, based on the signaling security protocol tunnel, non-access stratum registration on the user equipment to enable the user equipment to access the network; when relay switching is initiated, reusing the signaling security protocol tunnel, and reconfiguring the network address of the user equipment through a IKEv2 mobility and multihoming protocol; and establishing, according to the reconfigured network address of the user equipment, the third protocol data unit session connection from the user equipment to the second relay.

In some embodiments of the present disclosure, the outer IP address of the remote UE facing the same N3IWF as before can be reconfigured by using the IKEv2 Mobility and Multihoming Protocol (MOBIKE) mechanism. The N3IWF may reuse the MOBIKE specified in Section 6.2.9 of TS 23.501 as the untrusted mechanism specified by the local mobility anchor within the non-3GPP access network. Then, the relay data transmission is performed through the newly established relay path which is based on the second relay, and finally the old PC5 connection is released by the remote UE to complete the relay switching. Those skilled in the art should be aware that the relay switching method in this embodiment and the relay transmission method in the above embodiments are based on an overall concept, both of which use the same N3IWF as an anchor to realize the relay path multipath transmission and the relay path switching. In actual applications, the relay switching method in the embodiments can be used independently or in combination with the relay transmission method in the above embodiments, which is not limited here and will not be repeated here.

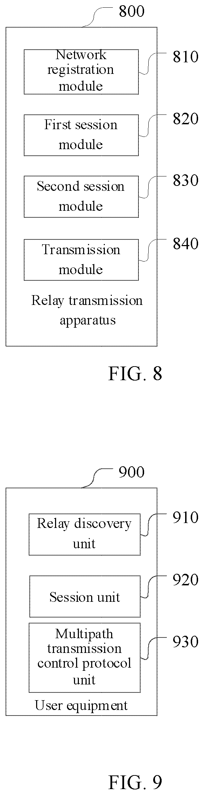

FIG. 8 shows a structural diagram of a relay transmission apparatus according to an embodiment of the present disclosure.

As shown in FIG. 8, the relay transmission apparatus 800 includes:
a network registration module 810, configured to perform network registration on a relay;
a first session module 820, configured to establish a first protocol data unit session connection from the relay to a network, and the relay is configured to be connected to a non-third generation partnership project interworking function, and includes a first relay and a second relay;
a second session module 830, configured to establish, based on a network address allocated to a user equipment by the first relay, a second protocol data unit session connection between the first relay and the user equipment; and
a transmission module 840, configured to enable, according to the multipath transmission control protocol connection between the user equipment and the non-third generation partnership project interworking function, the user equipment to be connected to the network via the first relay and the second relay while performing signal transmission with the network, wherein the multipath transmission control protocol connection is established based on the first protocol data unit session connection and the second protocol data unit session connection.

In some embodiments of the present disclosure, the Layer-3 U2N relay is enabled, by the network registration module 810, to perform the registration process, and the PDU session connection with the network is established by the first session module 820. The remote UE performs discovery of the U2N relay and establishes a unicast mode communication connection. The PDU session with the relay may be established by the second session module 830 according to the IP address allocated by the relay. The relay transmission is performed by the transmission module 840. When the remote UE needs to extend a new relay path, connection to the same N3IWF is ensured based on the N3IWF IP or FQDN, and the remote UE obtains a new IP and establishes the PDU session with the new U2N relay. The remote UE can use the modified IKE process to indicate its own MPTCP capability, and establish the signaling IPsec tunnel and the MPTCP sub-flow with the N3IWF.

In some embodiments of the present disclosure, first, the Layer-3 U2N relay performs a registration process to establish a PDU session connection with the network, that is, the first protocol data unit session connection, and then the remote UE performs discovery of the U2N relay, establishes the unicast mode communication connection, and establishes, according to the IP address allocated by the relay, the PDU session with the relay for relaying. The remote UE connected to the U2N relay supporting the N3IWF selects the N3IWF and determines the N3IWF IP address. Considering the scenario where the N3IWF does not support the multipath, the MPTCP field can be added when the FQDN is constructed, and the N3IWF that supports the multipath can be selected based on the FQDN. The remote UE uses the modified IKE process to indicate its own MPTCP capability, establishes the signaling IPsec tunnel and the MPTCP connection with the N3IWF, performs the NAS registration, and forwards, through the N3IWF, the parameter declaring the multipath capability to the AMF and the SMF. Finally, when the remote UE needs to extend a new relay path, steps 2 and 3 are performed until the connection to the same N3IWF is ensured based on the N3IWF IP or FQDN, and in this case, the remote UE obtains a new IP and establishes the PDU session with the new U2N relay. The remote UE uses the modified IKE process to indicate its own MPTCP capability, and establishes the signaling IPsec tunnel and the MPTCP sub-flow with the N3IWF, as shown in FIG. 5.

FIG. 9 shows a structural diagram of a user equipment according to an embodiment of the present disclosure.

As shown in FIG. 9, the user equipment 900 includes:
a relay discovery unit 910, configured to perform relay discovery;
a session unit 920, configured to establish a second protocol data unit session connection with a first relay, and the first relay is configured to be connected to a non-third generation partnership project interworking function;
a multipath transmission control protocol unit 930, configured to establish, according to a network address of a user equipment and a network address of the non-third generation partnership project interworking function, a multipath transmission control protocol connection between the user equipment and the non-third generation partnership project interworking function, the network address of the user equipment is allocated by the first relay, the network address of the non-third generation partnership project interworking function is obtained based on a first protocol data unit session connection between a relay and a network, and the relay includes the first relay and a second relay; and
a transmission unit 940, configured to enable, according to the multipath transmission control protocol connection, the user equipment to be connected to the network via the first relay and the second relay while performing signal transmission with the network, and the multipath transmission control protocol connection is established based on the first protocol data unit session connection and the second protocol data unit session connection.

In some embodiments of the present disclosure, the user equipment receives and records, based on the multipath transmission control protocol connection, the network address of the non-third generation partnership project interworking function and network addresses of multiple relay paths for multipath concurrent relay transmission; a new network address of the user equipment and a network address of the second relay are obtained according to the network addresses of the multiple relay paths; when a relay path is required to be extended, a third protocol data unit session connection from the user equipment to the second relay is established based on the new network address of the user equipment, the network address of the second relay and the network address of the non-third generation partnership project interworking function; a multipath transmission control protocol sub-flow connection is established according to the third protocol data unit session connection and the first protocol data unit session connection; and the user equipment is enabled, through the multipath transmission control protocol connection, to be connected to the network via the first relay, and the user equipment is enabled, through the multipath transmission control protocol sub-flow connection, to be connected to the network via the second relay.

In some embodiments of the present disclosure, the remote UE (i.e., the user equipment) uses the modified IKE process to indicate its own MPTCP capability, establishes the signaling IPsec tunnel and the MPTCP connection with the N3IWF, performs the NAS registration, and forwards, through the N3IWF, the parameter declaring the multipath capability to the AMF and the SMF. When the remote UE needs to extend a new relay path, connection to the same N3IWF as the original relay path is ensured, and in this case, the remote UE obtains a new IP and establishes the PDU session with the new U2N relay. The remote UE uses the modified IKE process to indicate its own MPTCP capability, and establishes the signaling IPsec tunnel and the MPTCP sub-flow with the N3IWF.

In some embodiments of the present disclosure, modifying, by the user equipment, the IKE process may include: first, the remote UE is enabled to select the N3IWF in the 5G PLMN according to the N3IWF IP or FQDN, the remote UE initiates the IKE initial exchange and establishes an IPsec Security Association (SA) (that is, the security protocol association) with the selected N3IWF. The remote UE should initiate the IKE_AUTH exchange by sending an IKE_AUTH request message, and a MP_CAPABLE parameter or a MP_JOIN parameter of the UE is added to the IKE_AUTH request message to declare that the sender has a MPTCP capability and wishes to establish an MPTCP connection on this connection, or wishes to establish a new sub-flow on the existing MPTCP connection. The N3IWF responds with an IKE_AUTH response message. A MP_CAPABLE parameter or a MP_JOIN parameter of the N3IWF is added to the IKE_AUTH response message to declare that the N3IWF has a MPTCP proxy capability. The remote UE verifies the N3IWF information and sends the MP_CAPABLE/MP_JOIN parameters of the remote UE and the N3IWF and the ACK confirmation information.

It should be noted that the relay transmission apparatus and the user equipment provided in the above embodiments belong to the same concept as the relay transmission method provided in the above embodiments, and a specific manner in which each module and unit performs an operation has been described in detail in the method embodiments, which will not be repeated here. In practical applications, the relay transmission apparatus and the user equipment provided in the above embodiments can allocate the above functions to different functional modules as needed, that is, an internal structure of the device is divided into different functional modules to complete all or part of the functions described above, which is not limited here.

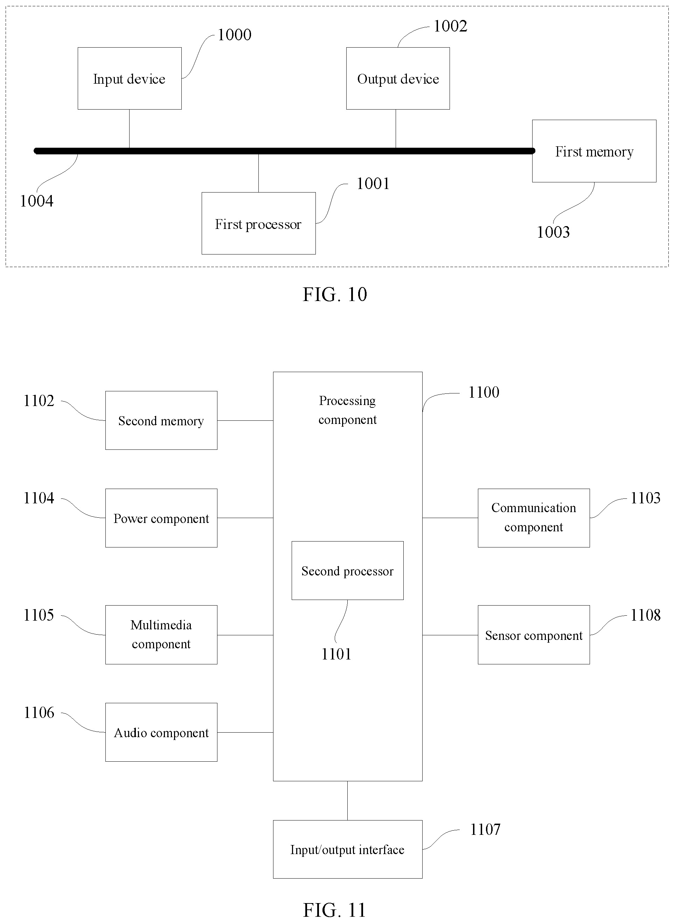

FIG. 10 shows a schematic diagram of a hardware structure of a user equipment suitable for implementing an embodiment of the present disclosure.

In some embodiments of the present disclosure, the device may include: one or more processors; and one or more machine-readable media having instructions stored thereon, which, when executed by the one or more processors, cause the device to perform the method described in FIG. 2. In practical applications, the device can be used as a terminal device or as a server, which is not specifically limited by embodiments of the present disclosure. As shown in FIG. 10, the terminal device may include: an input device 1000, a first processor 1001, an output device 1002, a first memory 1003, and at least one communication bus 1004. The communication bus 1004 is used to realize the communication connection between components. The first memory 1003 may include a high-speed RAM memory, and may further include a non-volatile storage NVM, such as at least one disk storage. Various programs may be stored in the first memory 1003 to complete various processing functions and implement the method steps of this embodiment.

In some embodiments of the present disclosure, the first processor 1001 may be implemented, for example, as a Central Processing Unit (CPU), an Application-Specific Integrated Circuit (ASIC), a Digital Signal Processor (DSP), a Digital Signal Processing Device (DSPD), a Programmable Logic Device (PLD), a Field Programmable Gate Array (FPGA), a controller, a microcontroller, a microprocessor or other electronic components, and the first processor 1001 is coupled to the input device 1000 and the output device 1002 via a wired or wireless connection.

In some embodiments of the present disclosure, the input device 1000 may include multiple input devices, for example, it may include at least one of a user interface for a user, a device interface for a device, and a programmable interface for software. In some embodiments, the device interface for the device may be a wired interface for data transmission between devices, or a hardware insertion interface (such as a USB interface, a serial port, etc.) for data transmission between devices. In some embodiments, the user interface for the user may be, for example, a control button for the user, a voice input device for receiving a voice input, and a touch sensing device (such as a touch screen with a touch sensing function, a touchpad, etc.) for receiving a user touch input. In some embodiments, the programmable interface for the software may be, for example, an entry for the user to edit or modify a program, such as an input pin interface or an input interface of a chip. The output device 1002 may include a display, an audio system and other output devices. The processor of the terminal device includes a function for executing the above user migration processing module. For the specific functions and technical effects, reference may be made to the above embodiments, which will not be repeated here.

FIG. 11 shows a schematic diagram of a hardware structure of another user equipment.

In some embodiments of the present disclosure, FIG. 11 is a specific embodiment of FIG. 10 in an implementation process. As shown in FIG. 11, the terminal device of the embodiments may include a second processor 1101 and a second memory 1102. The second processor 1101 executes computer program code stored in the second memory 1102 to implement the method described in FIG. 2 in the above embodiments. The second memory 1102 is configured to store various types of data to support operations on the terminal device. Examples of these data include instructions for any application or method operated on the terminal device, such as messages, signaling, etc. The second memory 1102 may include a Random Access Memory (RAM), and may also include a non-volatile memory, such as at least one disk storage. For example, the second processor 1101 is provided in the processing component 1100. The terminal device may further include: a communication component 1103, a power component 1104, a multimedia component 1105, a voice component 1106, an input/output interface 1107 and/or a sensor component 1108. The components specifically included in the terminal device are set according to actual needs, which is not limited by embodiments of the present disclosure. The processing component 1100 typically controls the overall operations of the terminal device. The processing component 1100 may include one or more second processors 1101 to execute instructions to complete all or part of steps in the above-mentioned data processing method. In addition, the processing component 1100 may include one or more modules to facilitate the interaction between the processing component 1100 and other components. For example, the processing component 1100 may include a multimedia module to facilitate the interaction between the multimedia component 1105 and the processing component 1100. The power component 1104 provides power to various components of the terminal device. The power component 1104 can include a power management system, one or more power sources, and other components associated with the generation, management, and distribution of power in the terminal device. The multimedia component 1105 includes a display screen that provides an output interface between the terminal device and the user. In some embodiments, the display screen may include a liquid crystal display (LCD) and a touch panel (TP). If the display screen includes the touch panel, the display screen can be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. The voice component 1106 is configured to output and/or input a voice signal. For example, the voice component 1106 includes a microphone (MIC) configured to receive an external voice signal when the terminal device is in an operation mode, such as a voice recognition mode. The received voice signal may be further stored in the second memory 1102 or sent via the communication component 1103. The input/output interface 1107 provides an interface between the processing component 1100 and peripheral interface modules, such as a click wheel, buttons, and the like. These buttons may include, but are not limited to, a volume button, a starting button, and a locking button. The sensor component 1108 includes one or more sensors for providing status assessments of various aspects of the terminal device. For example, the sensor component 1108 can detect an open/closed status of the terminal device, relative positioning of components, and the presence or absence of contact between the user and the terminal device. The sensor component 1108 can include a proximity sensor configured to detect the presence of nearby objects without any physical contact, including detecting the distance between the user and the terminal device. In some embodiments, the sensor component 1108 can also include a camera, etc. The communication component 1103 is configured to facilitate wired or wireless communication between the terminal device and other devices. The communication component 1103, the voice component 1106, the input/output interface 1107, and the sensor component 1108 involved in the embodiment of FIG. 11 can all be used as an implementation of the input device in the embodiment of FIG. 10.

Another aspect of embodiments further provides a computer-readable storage medium having a computer program stored thereon, which, when executed by a processor, implements the relay transmission method as described above. The computer-readable storage medium may be included in the electronic device described in the above embodiments, or may exist independently without being assembled into the electronic device.

It should be noted that the computer-readable medium shown in embodiments of the present disclosure may be a computer-readable signal medium or a computer-readable storage medium or any combination of the above two. The computer-readable storage medium may be, for example, electrical, magnetic, optical, electromagnetic, infrared, or semiconductor systems, apparatuses or devices, or any combination thereof. More specific examples of the computer-readable storage medium include but are not limited to: electrical connections with one or more wires, a portable computer disk, a hard disk, a random access memory (RAM), a read-only memory (ROM), an erasable programmable read-only memory (EPROM), a flash, an optical fiber, a portable compact disk read-only memory (CD-ROM), an optical storage device, a magnetic storage device, or any suitable combination thereof. In the present disclosure, the computer-readable signal medium may include a data signal transmitted in a baseband or as part of a carrier, which carries a computer-readable computer program. The transmitted data signal may be represented in many forms, including, but not limited to, an electromagnetic signal, an optical signal, or any suitable combination thereof. The computer-readable signal medium may also be any computer-readable medium other than the computer-readable storage medium, which may send, propagate, or transmit programs which are used by, or used in conjunction with an instruction execution system, apparatus, or device. The computer program contained on the computer-readable medium may be transmitted using any suitable medium, including but not limited to: wireless, wired, etc., or any suitable combination of the above.

The flowcharts and block diagrams in the drawings illustrate the architecture, functionality, and operation of possible implementations of systems, methods and computer program products according to various embodiments of the present disclosure. Each block in the flowcharts or block diagrams may represent a module, a program segment, or a portion of code, which include at least one executable instruction for implementing a specified logical function. It should also be noted that, in some alternative implementations, functions in the blocks may occur out of the order in the drawings. For example, two blocks shown in succession may, in fact, be performed substantially concurrently, or may sometimes be performed in a reverse order, depending upon the functionality involved. It will also be noted that each block of the block diagrams and/or flowcharts, and combinations of blocks in the block diagrams and/or flowcharts, may be implemented by special purpose hardware-based systems that perform the specified functions or operations, or by combinations of a special purpose hardware and computer instructions.

It should be noted that although several modules or units of devices for executing actions are mentioned in the above detailed description, such division of modules or units is not mandatory. In fact, features and functions of two or more of the modules or units described above may be embodied in one module or unit in accordance with the embodiments of the present disclosure. Alternatively, the features and functions of one module or unit described above may be further divided into multiple modules or units.

The units in embodiments of the present disclosure may be implemented by software or hardware. The described units may also be provided in a processor. Names of such units do not constitute a limitation on the unit itself in some way.

It should be noted that although several modules or units of devices for executing actions are mentioned in the above detailed description, such division of modules or units is not mandatory. In fact, features and functions of two or more of the modules or units described above may be embodied in one module or unit in accordance with the embodiments of the present disclosure. Alternatively, the features and functions of one module or unit described above may be further divided into multiple modules or units.

Through the description of the above embodiments, those skilled in the art will readily understand that the exemplary embodiments described here may be implemented by software or by software in combination with necessary hardware. Therefore, the technical solution according to the embodiments of the present disclosure may be embodied in a form of software product, which may be stored in a non-volatile storage medium (which may be a CD-ROM, a USB disk, a mobile hard disk, etc.) or on a network, including a number of instructions to make a computing device (which may be a personal computer, a server, a touch terminal, or a network device, etc.) to perform the methods according to the embodiments of the present disclosure.

Other embodiments of the present disclosure will be apparent to those skilled in the art from consideration of the specification and practice of the present disclosure disclosed here. The disclosure is intended to cover any variations, uses, or adaptations of the present disclosure, which are in accordance with the general principles of the present disclosure and include common general knowledge or conventional technical means in the art that are not disclosed in the present disclosure.

It should be understood that the above are merely preferred exemplary embodiments of the present disclosure, which are not intended to limit the implementations of the present disclosure in any form. A person skilled in the art can easily make corresponding changes or modifications based on the main concept and spirit of the present disclosure. Therefore, the protection scope of the present disclosure shall be based on the protection scope required by the claims.

## Claims

1. A relay transmission method, comprising:
performing network registration on a relay to establish a first protocol data unit session connection from the relay to a network, wherein the relay is configured to be connected to a non-third generation partnership project interworking function, and comprises a first relay and a second relay;
establishing, based on a network address allocated to a user equipment by the first relay, a second protocol data unit session connection between the first relay and the user equipment; and
enabling, according to a multipath transmission control protocol connection between the user equipment and the non-third generation partnership project interworking function, the user equipment to be connected to the non-third generation partnership project interworking function via the first relay and the second relay and access the network while performing signal transmission with the network, wherein the multipath transmission control protocol connection is established based on the first protocol data unit session connection and the second protocol data unit session connection.

2. The relay transmission method according to claim 1, wherein enabling, according to the multipath transmission control protocol connection between the user equipment and the non-third generation partnership project interworking function, the user equipment to be connected to the network via the first relay and the second relay while performing the signal transmission with the network comprises:
establishing a third protocol data unit session connection from the user equipment to the second relay according to a network address of the second relay and a new network address of the user equipment, wherein the network address of the second relay and the new network address of the user equipment are obtained based on a multipath transmission control protocol;
establishing, based on the first protocol data unit session connection and the third protocol data unit session connection, a multipath transmission control protocol sub-flow connection between the user equipment and the non-third generation partnership project interworking function; and
enabling, through the multipath transmission control protocol connection, the user equipment to be connected to the network via the first relay, and enabling, through the multipath transmission control protocol sub-flow connection, the user equipment to be connected to the network via the second relay.

3. The relay transmission method according to claim 2, wherein after establishing the second protocol data unit session connection between the first relay and the user equipment, the method further comprises:
establishing, according to a network address of the non-third generation partnership project interworking function, a signaling security protocol tunnel between the user equipment and the non-third generation partnership project interworking function; and
performing, based on the signaling security protocol tunnel, non-access stratum registration on the user equipment to enable the user equipment to access the network.

4. The relay transmission method according to claim 3, wherein after establishing, according to the network address of the non-third generation partnership project interworking function, the signaling security protocol tunnel between the user equipment and the non-third generation partnership project interworking function, the method further comprises:
establishing, according to a network key exchange protocol and the network address of the non-third generation partnership project interworking function, a security protocol association between the user equipment and the non-third generation partnership project interworking function;
receiving, based on the security protocol association, request information of the user equipment and response information of the non-third generation partnership project interworking function to the request information, wherein the request information comprises a network key exchange verification request and a multipath parameter of the user equipment, and the response information comprises a network key exchange verification request response and a multipath capability parameter of the non-third generation partnership project interworking function;
enabling, according to the network key exchange verification request and the network key exchange verification request response, network key exchange between the user equipment and the non-third generation partnership project interworking function; and
after the network key exchange is completed, establishing, according to the multipath capability parameter of the user equipment and the multipath capability parameter of the non-third generation partnership project interworking function, the multipath transmission control protocol connection and the multipath transmission control protocol sub-flow connection.

5. A relay transmission method, comprising:
performing relay discovery, and establishing a second protocol data unit session connection with a first relay, wherein the first relay is configured to be connected to a non-third generation partnership project interworking function;
establishing, according to a network address of a user equipment and a network address of the non-third generation partnership project interworking function, a multipath transmission control protocol connection between the user equipment and the non-third generation partnership project interworking function, wherein the network address of the user equipment is allocated by the first relay, the network address of the non-third generation partnership project interworking function is obtained based on a first protocol data unit session connection between a relay and a network, and the relay comprises the first relay and a second relay; and
enabling, according to the multipath transmission control protocol connection, the user equipment to be connected to the network via the first relay and the second relay while performing signal transmission with the network, wherein the multipath transmission control protocol connection is established based on the first protocol data unit session connection and the second protocol data unit session connection.

6. The relay transmission method according to claim 5, wherein performing the relay discovery and establishing the second protocol data unit session connection with the first relay comprises:
after performing the relay discovery and discovering the first relay, establishing a unicast communication connection between the user equipment and the first relay;
enabling, based on the unicast communication connection, the user equipment to receive the network address of the user equipment allocated by the first relay; and
establishing, according to the network address of the user equipment, the second protocol data unit session connection between the user equipment and the first relay.

7. The relay transmission method according to claim 5, wherein enabling, according to the multipath transmission control protocol connection, the user equipment to be connected to the network via the first relay and the second relay while performing the signal transmission with the network comprises:
based on the multipath transmission control protocol connection, receiving and recording the network address of the non-third generation partnership project interworking function and network addresses of multiple relay paths for multipath concurrent relay transmission;
obtaining, according to the network addresses of the multiple relay paths, a new network address of the user equipment and a network address of the second relay;
when a relay path is required to be extended, establishing, based on the new network address of the user equipment, the network address of the second relay and the network address of the non-third generation partnership project interworking function, a third protocol data unit session connection from the user equipment to the second relay;
establishing, according to the third protocol data unit session connection and the first protocol data unit session connection, a multipath transmission control protocol sub-flow connection; and
enabling, through the multipath transmission control protocol connection, the user equipment to be connected to the network via the first relay, and enabling, through the multipath transmission control protocol sub-flow connection, the user equipment to be connected to the network via the second relay.

8. The relay transmission method according to claim 5, wherein before enabling, according to the multipath transmission control protocol connection, the user equipment to be connected to the network via the first relay and the second relay while performing the signal transmission with the network, the method further comprises:
when the network is accessed by the user equipment for the first time, sending registration request information to the non-third generation partnership project interworking function to enable the non-third generation partnership project interworking function to forward the registration request information to a core network element to perform a non-access network registration process; and
receiving an authentication completion message sent by the non-third generation partnership project interworking function, completing registration, and accessing the network.

9. A relay switching method, comprising:
performing network registration on a relay to establish a first protocol data unit session connection from the relay to a network, wherein the relay is configured to be connected to a non-third generation partnership project interworking function, and comprises a first relay and a second relay;
establishing, based on a network address allocated to a user equipment by the first relay, a second protocol data unit session connection between the first relay and the user equipment;
establishing, according to a network address of the non-third generation partnership project interworking function, a signaling security protocol tunnel between the user equipment and the non-third generation partnership project interworking function to enable the user equipment to be connected to, through the first relay, the non-third generation partnership project interworking function and access the network; and
reusing the signaling security protocol tunnel to establish a third protocol data unit session connection from the user equipment to the second relay, and enabling the user equipment to switch to be connected to, through the second relay, the non-third generation partnership project interworking function and access the network.

10. The relay switching method according to claim 9, wherein reusing the signaling security protocol tunnel to establish the third protocol data unit session connection from the user equipment to the second relay comprises:
establishing, according to the network address of the non-third generation partnership project interworking function, the signaling security protocol tunnel between the user equipment and the non-third generation partnership project interworking function;
performing, based on the signaling security protocol tunnel, non-access stratum registration on the user equipment to enable the user equipment to access the network;
when relay switching is initiated, reusing the signaling security protocol tunnel, and reconfiguring a network address of the user equipment through a IKEv2 mobility and multihoming protocol; and
establishing, according to the reconfigured network address of the user equipment, the third protocol data unit session connection from the user equipment to the second relay.

11. A relay transmission apparatus, comprising:
a network registration module, configured to perform network registration on a relay;
a first session module, configured to establish a first protocol data unit session connection from the relay to a network, wherein the relay is configured to be connected to a non-third generation partnership project interworking function, and comprises a first relay and a second relay;
a second session module, configured to establish, based on a network address allocated to a user equipment by the first relay, a second protocol data unit session connection between the first relay and the user equipment; and
a transmission module, configured to enable, according to the multipath transmission control protocol connection between the user equipment and the non-third generation partnership project interworking function, the user equipment to be connected to the network via the first relay and the second relay while performing signal transmission with the network, wherein the multipath transmission control protocol connection is established based on the first protocol data unit session connection and the second protocol data unit session connection.

12. A user equipment, comprising:
a relay discovery unit, configured to perform relay discovery;
a session unit, configured to establish a second protocol data unit session connection with a first relay, wherein the first relay is configured to be connected to a non-third generation partnership project interworking function;
a multipath transmission control protocol unit, configured to establish, according to a network address of a user equipment and a network address of the non-third generation partnership project interworking function, a multipath transmission control protocol connection between the user equipment and the non-third generation partnership project interworking function, wherein the network address of the user equipment is allocated by the first relay, the network address of the non-third generation partnership project interworking function is obtained based on a first protocol data unit session connection between a relay and a network, and the relay comprises the first relay and a second relay; and
a transmission unit, configured to enable, according to the multipath transmission control protocol connection, the user equipment to be connected to the network via the first relay and the second relay while performing signal transmission with the network, wherein the multipath transmission control protocol connection is established based on the first protocol data unit session connection and the second protocol data unit session connection.

13. An electronic device, comprising:
a memory; and
a processor coupled to the memory, wherein the processor is configured to execute, based on instructions stored in the memory, the relay transmission method according to any one of claims 1 to 8, or the relay switching method according to any one of claims 9 to 10.

14. A computer-readable storage medium having computer program instructions stored thereon, which, when executed by a processor, implement the relay transmission method according to any one of claims 1 to 8 or the relay switching method according to any one of claims 9 to 10.

15. A computer program comprising:
an instruction, which, when executed by a processor, causes the processor to execute the relay transmission method according to any one of claims 1 to 8, or the relay switching method according to any one of claims 9 to 10.
